# EUROPEAN PATENT APPLICATION

(11) **EP 3 379 192 A1**
(43) Date of publication of application: **26.09.2018**
(21) Application number: 16866343.3
(22) Date of filing: 16.11.2016
(51) Int. Cl.: F28F 13/18, B32B 15/08, B32B 15/20, C09D 7/12, C09D 101/02, C09D 163/10, C09D 171/02, F28F 1/32

(54) **PRE-COAT FIN AND HEAT EXCHANGER**

(30) Priority: 20.11.2015 JP 2015228230
(71) Applicant: UACJ Corporation, Tokyo 100-0004 (JP)
(72) Inventor: SASAZAKI Mikine, Tokyo 100-0004 (JP); UEDA Kaoru, Tokyo 100-0004 (JP)
(74) Representative: Kramer Barske Schmidtchen Patentanwälte PartG mbB
(86) International application number: PCT/JP2016/083953
(87) International publication number: WO 2017/086342

(57) **Abstract**

A precoated alumi num sheet for a fin of a heat exchanger' which excels in sheeti ng of condensed water while excelng in hydrophilicity over a long time, can sufficiently prevent the adherence of frost, and excels in frost removal properties' and a heat exchanger are provided. The heat exchanger comprises: a precoated aluminum sheet (1) having a substrate (2) composed of aluminum, and a hydrophilic-coating film (3) formed on at least one surface thereof; and a fi n composed of the precoated alumi num sheet (1). In the precoated alumi num sheet (1), a surface roughness Rz_{L} of the hydrophilic-coating film (3) in a rolling-parallel direction X of the substrate (2) and a surface roughness Rz_{LT} of the hydrophilic-coati ng film (3) in a rolling-perpendicular direction of the substrate (2) satisfy the relationships Rz_{L} ¤ 1.5 ≈m, 0.3 ≈m ¤ Rz_{LT} ¤ 2.5 ≈m, and Rz_{L}/Rz_{LT} ¤ 0.9. A contact angle a of a water droplet (19) with respect to the hydrophilic-coating film (3) is 25é or less, and a sliding angle b of the water droplet (19) in the rolling-parallel direction X is 20é or less.

## Description

### TECHNICAL FIELD

The present invention relates to precoated fins, each having a substrate composed of aluminum or an aluminum alloy, and a hydrophilic-coating film, which is formed on a surface thereof, and to a heat exchanger comprising the precoated fins.

### BACKGROUNDART

Fin-tube types are used in heat exchangers used for air conditioners for air conditioning. A heat exchanger comprises tubing made of copper or aluminum, and numerous plate fins made of aluminum and that the tubing passes through. The plate fins are formed by casting, hot rolling, and cold rolling aluminum or an aluminum alloy into a coil shape, and a hydrophilic paint or a water-repellent paint is precoated on both sides.

In recent years, there has been demand for improvement in the heat-exchanging performance of heat-exchanging performance and improvement in the hydrophilicity of the fins with the aim of reducing noise during operation. There is demand for contamination resistance and water-scattering resistance in the fins of indoor units for the purpose of preventing water scatter and dew scatter and prolonging the hydrophilic performance. In addition, to conserve energy, there is continuing demand for defrosting properties in the fins of outdoor units, and the idea of increasing the number of fins by narrowing the fin pitch is being studied.

Air conditioners for home use and for business use comprise indoor units and outdoor units, which are connected by tubing, through which a coolant circulates. In the interiors of the indoor unit and the outdoor unit, there are heat exchangers having fins provided on a coolant-passageway tube; fans for delivering a draft to the heat exchanger and motors for driving the fans are disposed in the interiors of the indoor unit and the outdoor unit. A compressor and an expansion valve are incorporated within a passage that connects the outdoor unit and the outdoor unit, and heat exchange is performed. During a cooling operation, the heat of the coolant, which became high temperature owing to the compressor, is dissipated to the outdoor space by the outdoor unit; the coolant, whose temperature has become low, is evaporated by being passed through the expansion valve; and the coolant, whose temperature has become low, passes through the indoor unit; thereby, a cold draft is supplied to the indoor space. The cooling operation becomes possible by a cycle in which the coolant, which has absorbed heat from the indoor space, is compressed once again by the compressor.

In contrast, during a heating operation, the heat of the coolant, which became high temperature owing to the compressor, is discharged to the indoor space by the indoor unit; the coolant, whose temperature has decreased, is evaporated by being passed through the expansion valve; and that coolant, whose temperature has become low, passes through the outdoor unit and absorbs heat of the outdoor space. The heating operati on becomes possible by a cycle in which the coolant that has absorbed heat from the outdoor space once again is compressed by the compressor. Normally, when a heating operation is being performed, because the outdoor temperature is low to the extent that it is felt to be cold, it is necessary to further lower the outdoor temperature of the coolant in order to absorb heat from the outdoor space; consequently, the coolant sometimes becomes 0éC or lower. If the temperature of the coolant becomes 0éC or lower, then the fins that contact the tubing inevitably become 0éC or lower, and therefore moisture in the air adheres and frost adheres.

If frost adheres to the fins of the outdoor unit, because the frost becomes a barrier between the coolant and the outdoor air, movement of heat is impeded; because the amount of ai r flowing between the fins decreases, a much greater decrease in heat-exchanging performance results. If an excessively large amount of frost adheres and the heat-exchanging performance decreases, then the need arises to stop the heating operation and perform a defrosting operation to remove that frost. In the defrosting operation, the coolant that passes through the outdoor unit is heated up to a temperature that will melt the frost, the frost is changed to water by the circulation of the coolant for a fixed time, and the water is subsequently discharged; however, a problem arises in that energy is needed to heat the coolant and a problem arises in that, because the heating operation is stopped, indoor comfort is impaired. Consequently, techniques for reducing the adherence of frost have been proposed.

In Patent Document 1, a hydrophilic-coating film containing a hydrophilic resin and cross-linkable fine particles is proposed. Furthermore, as the hydrophilic resin, a hydrophilic-coating film is proposed, in which a metal surface is covered with a hydrophilic film using a hydrophilization treatment agent containing a specified (meth)acrylic resin, polyvinyl alcohol and at least one resin selected from polyethylene oxide and polyethylene glycol.

In Patent Document 2, a water-sheeting coating agent is proposed that contains an organosilicon compound component, which is composed of a mixture of a partial hydrolysate of polyorganosiloxane and a partial hydrolysate of fluoroalkylsilane, and an organic solvent capable of dissolving the organosilicon compound component.

In Patent Document 3, a water-repellent coating composition composed of an organic-resin solution and fine particles is proposed.

In Patent Document 4, a frost-formation-prevention treatment composition is proposed in which a cross-linking agent, a fluorine-based polymer, and an antifoaming agent are admixed into a specified acrylic-modified epoxy resin.

### PRIORART LITERATURE

### Patent Documents

Patent Document 1
   Japanese Laid-open Patent Publication 2014-000534
Patent Document 2
   Japanese Laid-open Patent Publication 2013-147573
Patent Document 3
   Japanese Laid-open Patent Publication H5-117637
Patent Document 4
   Japanese Laid-open Patent Publication 2011-102334

### SUMMARY OF THE INVENTION

### PROBLEMS TO BE SOLVED BY THE INVENTION

With respect to the hydrophilic-coating film of Patent Document 1, because condensed water wets and spreads on the fin surfaces, it is characterized in that the ventilation resistance can be maintained low and heat-exchanging performance is high. However, owing to the effects of that high hydrophilicity, a thin water film tends to be maintained on the fin surfaces. Furthermore, because the hydrophilic-coating film surfaces have a rough unevenness, hydrophilicity is caused to be exhibited, and consequently the water film tends not to flow off. As a result, there is a problem in that frost tends to adhere to the fins of the outdoor unit during a heating operation.

In addition, owing to the use of the water-sheeting coating agent of Patent Document 2, a coating film can be formed that excels in water sheeting and can be maintained for a long time. However, the water-sheeting coating agent is suited for postcoating; it is not suited for precoating. In addition, there is a problem in that the water-sheeting durability of the coating film formed by the water-sheeting coating agent is insufficient.

Patent Document 3 proposes to lengthen the frost-formation time by making the fin surfaces ultra-water- repellent using a coating of the water-repellent coating composition described above; however, the contact-surface area between the fin surfaces, which have a high coefficient of heat transfer, and the condensed water becomes small. As a result, the surface area over which the fin surfaces contact the air, which has a low coefficient of heat transfer, becomes large, and consequently heat-exchanging performance becomes low. In addition, condensed water tends to turn into ice rather than frost. Consequently, during a defrosting operation (thawing operation), instead of frost melting, the ice tends to drop off, and there is a risk that an ice mass will build up inside the outdoor unit. As a result, a separate apparatus for removing the ice mass that has accumulated inside the outdoor unit becomes necessary.

In Patent Document 4, the frost-formation-prevention treating composition suppresses the formation of frost in the outdoor unit, and thereby a coating that excels in corrosion resistance can be formed. However, water-sheeting is insufficient and therefore there is a demand for further improvement.

The present invention was conceived considering these problems, and an object of the present invention is to provide: a precoated aluminum sheet for a fin of a heat exchanger that excels in sheeting of condensed water while exceling in hydrophilicity over a long time, can sufficiently prevent the adherence of frost, and excels in frost removal properties; and to provide a heat exchanger.

### MEANS FOR SOLVING THE PROBLEMS

One aspect of the present invention is a precoated aluminum sheet for a fin of a heat exchanger comprising:
a substrate composed of aluminum; and
a hydrophilic-coating film formed on at least one surface of the substrate;
wherein:
a surface roughness Rz_{L} of the hydrophilic-coating film in a rolling-parallel direction of the substrate and a surface roughness Rz_{LT} of the hydrophilic-coating film in a rolling-perpendicular direction of the substrate satisfy the relationships Rz_{L} ¤ 1.5 ≈m, 0.3 ≈m ¤ Rz_{LT} ¤ 2.5 ≈m, and Rz_{L}/Rz_{LT} ¤ 0.9; and
a contact angle of a water droplet with respect to the hydrophilic-coating film is 25é or less, and a sliding angle of a water droplet in the rolling-parallel direction of the substrate is 20é or less.

Another aspect of the present invention is a heat exchanger comprising a fin composed of the precoated aluminum sheet.

### EFFECTS OF THE INVENTION

The precoated aluminum sheet has the hydrophilic-coating film in which the surface roughness Rz_{L} and the surface roughness Rz_{LT} satisfy the above-mentioned relationships. Furthermore, the contact angle of the water droplet with respect to the hydrophilic-coating film and the water droplet sliding angle are the above-mentioned prescribed values or less. Consequently, the precoated aluminum sheet excels in hydrophilicity and, even if cohered water adheres to a surface, the cohered water tends to slide off. Furthermore, when sliding off, it is possible to prevent wetting and spreading of the cohered water on the surface of the hydrophilic-coating film. Furthermore, the precoated aluminum sheet can maintain such excellent hydrophilicity and sliding-off properties of the cohered water for a long time. Consequently, by using the precoated aluminum sheets in the fins of the heat exchanger, the adherence of frost can be sufficiently prevented and the frost removal properties are also excellent.

### BRIEF DESCRIPTION OF THE DRAWINGS

FIG. 1 is an enlarged cross-sectional view of a precoated aluminum sheet, which has a hydrophilic-coating film formed on a substrate, accordi ng to working example 1.
FIG. 2 is a top view of the precoated aluminum sheet according to working example 1.
FIG. 3 includes explanatory diagrams according to working example 1, in which (a) is an explanatory diagram that shows a water droplet, having a small contact angle, on the hydrophilic-coating film, and (b) is an explanatory diagram that shows a water droplet, having a large contact angle, on the hydrophilic-coating film.
FIG. 4 is an explanatory diagram that shows, according to working example 1, a method of measuring a sliding angle.
FIG. 5 is an enlarged cross-sectional view of the precoated aluminum sheet having a primer layer between the substrate and the hydrophilic-coating film according to worki ng example 1.
FIG. 6 is an oblique view of a heat exchanger according to working example 1.

### MODES FOR CARRYING OUT THE INVENTION

Next, embodiments of a precoated aluminum sheet and a heat exchanger will be explained.

The precoated aluminum sheet has a hydrophilic-coating film formed on a substrate. The hydrophilic-coating film may be formed on one si de of the substrate or on both si des. Preferably, the hydrophilic-coating film should be formed on both sides of the substrate. In this case, the fi ns for the heat exchanger composed of the precoated aluminum sheets can exhibit excellent hydrophilicity on both sides thereof and can exhibit excellent sheeting of condensed water. Consequently, the adherence of frost to the fi ns of the heat exchanger can be much better prevented and the frost removal properties can be much more improved.

With regard to the precoated alumi num sheet, the surface roughness Rz_{L} of the hydrophilic-coating film in the substrate rolling-paralel direction and the surface roughness Rz_{LT} of the hydrophilic-coating film in the substrate rolling-perpendicular direction preferably satisfy the relationships Rz_{L} ¤ 1.5 ≈m, 0.3 ≈m ¤ Rz_{LT} ¤ 2.5 ≈m, and Rz_{L}/Rz_{LT} ¤ 0.9. The substrate rolling-parallel direction is the direction parallel to the rolling direction, and the rolling-perpendicular direction is the direction perpendicular to the rolling direction. It is noted that every surface roughness in the present specification indicates the maximum height roughness according to JIS B0601-2001.

If Rz_{L} > 1.5 ≈m, then there is a risk that sheeting of condensed water will tend to decrease. In addition, there is a risk that frost will tend to adhere to the fi ns composed of precoated aluminum sheets and that removal of the adhered frost will become problematic. In addition, if Rz_{LT} < 0.3 ≈m, then there is a risk that hydrophilicity will decrease. In addition, there is a risk that frost will tend to adhere to the fins. From the view point of better preventing these, Rz_{LT} ° 0.8 ≈m is more preferable, Rz_{LT} ° 1 ≈m is yet more preferable, and Rz_{LT} ° 1.5 ≈m is particularly preferable. In addition, if Rz_{LT} > 2.5 ≈m, then there is a risk that frost will tend to adhere to the fins and removal of the adhered frost will become problematic. From the view point of better preventing these, Rz_{LT} ¤ 2.3 ≈m is more preferable, and Rz_{LT} ¤ 1.8 ≈m is yet more preferable.

In addition, if Rz_{L}/Rz_{LT} > 0.9, then there is a risk that hydrophilicity and/or sheeting of the cohered water will tend to decrease. In addition, there is a risk that frost will tend to adhere to the fi ns and that removal of the adhered frost will become problematic. From the view point of better preventing these, Rz_{L}/Rz_{LT} ¤ 0.8 is more preferable, and Rz_{L}/Rz_{LT} ¤ 0.7 is yet more preferable.

The contact angle of the water droplet with respect to the hydrophilic-coating film is preferably 25é or less. If the contact angle is greater than 25é, then there is a risk that hydrophilicity and sheeting of the cohered water will tend to decrease. In addition, there is a risk that frost will tend to adhere to the fins and removal of adhered frost will become problematic. From the view point of better preventing these, the contact angle is more preferably 20é or less and yet more preferably 15é or less.

In addition, the sliding angle of the water droplet, in the rolling-parallel di recti on of the substrate, with respect to the hydrophilic-coating film is preferably 20é or less. If the sliding angle is greater than 20é, then there is a risk that hydrophilicity and sheeting of the cohered water will tend to decrease. In addition, there is a risk that frost will tend to adhere to the fins and removal of the adhered frost will become problematic. F rom the viewpoint of better preventing these, the sliding angle is more preferably 15é or less and yet more preferably 10é or less.

The average film thickness of the hydrophilic-coating film is preferably 0.3 ≈m or more and 1.5 ≈m or less. In this case, it is possible to much better prevent a decrease in sheeting of cohered water. In addition, the adherence of frost is better prevented and it becomes easier to better remove adhered frost. Furthermore, there is the possi bi lity of increasing the film thickness beyond the above-mentioned range; however, even if the film thickness is increased excessively, virtually no improvement effect is obtained and the weight of the fins composed of the precoated aluminum sheets becomes large, which is not preferable. The average film thickness of the hydrophilic-coating film is more preferably 0.5 ≈m or more and yet more preferably 0.6 ≈m or more.

With regard to the hydrophilic-coating film, a hydrophilic polymer (A) is cross linked by a cross-linking agent (B). At least one type of polymer selected from the group consisting of acrylic-modified epoxy resin, acrylic-cellulose resin, cellulose-melamine resin, cellulose-acetate resin, and polyoxyalkylene resin can be used as the hydrophilic polymer (A). At least one selected from the group consisting of isocyanate, blocked polyisocyanate, and carbodiimide can be used as the cross-linking agent (B). By using a combination of these, the surface roughness Rz_{L} and the surface roughness Rz_{LT} satisfy the above-mentioned desired relationships, and it becomes easy to achieve a hydrophilic film in which the contact angle and the sliding angle are within the above-mentioned desired ranges.

The acrylic-modified epoxy resin is an epoxy resin that has been modified with an acrylic. The acrylic-modified epoxy resin can be obtained by, for example, the following methods (1) ⁻ (3). That is, (1) an acrylic-epoxy resin can be obtained by a method in which a polymerizable unsaturated monomer, such as an acrylic monomer, is polymerized with and grafted onto an epoxy resin by a hydrogen abstraction reaction. (2) The acrylic-modified epoxy resin can also be obtained by esterifying a carboxyl-group-containing polymerizable unsaturated monomer, such as a carboxyl-group-containing acrylic monomer, with the epoxy group of an epoxy resin and causing the acrylic monomer to polymerize at the double bond introduced in the epoxy resin. (3) An acrylic-modified epoxy resin can also be obtained by reacting an epoxy resin and a carboxyl-group-containing acrylic resin. The acrylic-modified epoxy resin manufactured by method (3) is preferable. In this case, the adherence of frost can be better prevented and the corrosion resistance of the hydrophilic-coati ng film is improved.

The hydrophilic polymerizing agent and the cross-linking agent are mixed, and are coated onto at least one surface of the substrate; a cross-linking reaction that creates amide groups can be initiated by heating. As a result, by making a deterioration in hydrophilicity less likely to happen, which deterioration is caused by the resin, which has functional groups that exhibit hydrophilicity, flowing out to the condensed water during use, a hydrophilic-coating film that better excels in durabibility of hydrophilicity and sheeting of cohered water is obtained.

The substrate is composed of sheet-shaped aluminum. In the present specification, aluminum is a general term that includes not only pure aluminum but also aluminum alloys. The surface roughness Rz of the substrate in the rolling-perpendicular direction is preferably 0.5 ≈m or more and 3 ≈m or less. In this case, it becomes easier for the surface roughness Rz_{L} and the surface roughness Rz_{LT} of the hydrophilic-coating film to better satisfy the above-mentioned desired relationships. From a similar view point, the surface roughness Rz of the substrate in the rolling-perpendicular direction is preferably 1 ≈m or more and 2.5 ≈m or less and is yet more preferably 1.2 ≈m or more and 2 ≈m or less.

The precoated aluminum sheets are used in the fins of the heat exchanger. In at least part of each fin, the rolling-parallel direction of the substrate is preferably disposed in the vertical di rection. In this case, the above-mentioned excel lent features of the precoated aluminum sheet can manifest sufficiently. As a result, in the heat exchanger, the adherence of frost can be more sufficiently prevented and the frost can be more sufficiently removed. With regard to the phrase "the rolling-parallel direction is the vertical direction" mentioned above, it is noted that it is only necessary that the rolling-parallel direction and the vertical direction coincide with each other in external view; however, the rolling-parallel direction and the vertical direction do not necessarily have to coincide, and some tilt is allowed. The tilt angle can be set to any angle as long as the cohered water that is adhered to the fi n flows down.

Normally, when the precoated aluminum sheet is being formed into the fins for the heat exchanger, the rolling-parallel direction of the substrate becomes the longitudinal direction of the sheet-shaped fins (hereinbelow, called plate fins), and the longitudinal direction of the plate fins is disposed perpendicularly (that is, vertically) in the heat exchanger. That is, the rolling-parallel direction of the precoated alumi num sheet becomes the perpendicular direction in the heat exchanger. Accordingly, by imparting satisfactory water sheeting properties in the rolling-parallel direction as in the above-mentioned precoated aluminum sheet, cohered water (also called, for example, condensed water droplets) in the heat exchanger is satisfactorily exhausted.

The precoated aluminum sheet can be manufactured as follows. First, a substrate composed of aluminum is manufactured as follows. Specifically, an ingot is manufactured by casting aluminum (i.e., a casting process). Subsequently, a coil (i.e., an aluminum sheet coiled into a roll shape) is manufactured by heating and rolling the ingot (i.e., a hot-rolling process). Next, the post-hot-rolled coil is cold rolled (i.e., a cold-rolling process). Thus, a substrate composed of aluminum can be obtained. Furthermore, the maximum roughness of the cold-rolled coil in the rolling-perpendicular direction is preferably set to 0.5 ≈m or more and 3.0 ≈m or less, as described above. To adjust the surface roughness Rz of the substrate in the rolling-perpendicular direction to the above-mentioned desired range, various rolling conditions, such as the maximum roughness of the cold-rolling rollers in the rolling-perpendicular direction, the rolling speed, the lubricating oil, etc., should be adjusted appropriately. To improve cold rollability, annealing (i.e., an annealing process) may be performed in the course of the cold-rolling process.

Contamination, such as rolling oil, can be removed from the surfaces of the post-cold-rolled coil using an alkaline degreaser, and the surfaces can be etched. Thereafter, a chemical-conversion coating can be formed on the coil surfaces using a chemical-conversion-treatment agent. Chromate treatment, zirconia treatment, and the like are examples of the chemical-conversion treatment. By forming the chemical-conversion coating, adhesion between the substrate and the hydrophilic-coating film and between the substrate and a primer layer, which is described below, can be improved. Subsequently, the coil surfaces can be coated, by roll coating, with a hydrophilic paint for forming a hydrophilic-coating film, thereby forming the hydrophilic-coating film. A paint containing, for example, the hydrophilic polymer (A) and the cross-linking agent (B) described above is used as the hydrophilic paint. The hydrophilic paint can further contain a solvent, various additives, etc.

The viscosity of the hydrophilic paint is preferably set to 5⁻15 s by taking a measurement using a Ford Cup No. 4 as stipulated in JIS K 5400. In this case, it becomes easier to form the hydrophilic-coating film in which the surface roughness Rz_{L} and the surface roughness Rz_{LT} satisfy the above-mentioned desired relationships. After coating with the hydrophilic paint, the hydrophilic polymer (A) can be cross-linked by the cross-linking agent (B) by heating for several seconds at a temperature of approximately 200éC. By cross-linking the hydrophilic polymer (A), a resin having functional groups that exhibit hydrophilicity tends not to flow out to water. Consequently, the durability of hydrophilicity can be further improved.

In addition, before coating with the water-based paint, it is preferable to form a primer layer. In this case, the primer layer is formed between the substrate and the hydrophilic-coating film, and thereby adhesion between the substrate and the hydrophilic-coating film can be further improved. The primer layer can be formed of at least one selected from the group consisting of a urethane-based primer, an acrylic-based primer, and an epoxy-based primer. The thickness of the primer is preferably 0.3 ≈m or more and 3 ≈m or less.

Precoated alumi num sheets are used in the manufacture of the heat exchanger as, for example, described below. Specifically, first, precoated aluminum sheets are strip cut from the coil to obtain a plurality of fins. Subsequently, the fins are subject to slit formation, louver molding, and collar formation using a press. Subsequently, metal tubes disposed at prescri bed locations are passed through the holes provided in the fins so as to stack the fi ns. After stacking, tube-expanding plugs are inserted into the metal tubes to enlarge the outer diameter of the metal tubes, and thereby the metal tube and the fi ns are caused to closely contact each other. Thus, the heat exchanger can be obtained.

### Working Examples

### (Working Example 1)

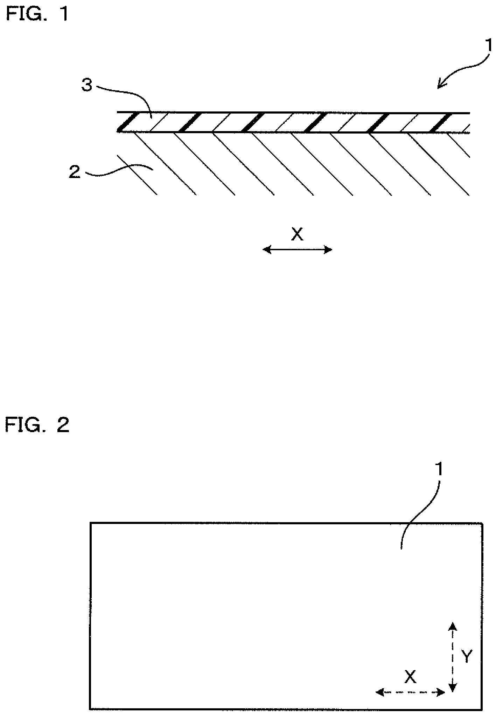

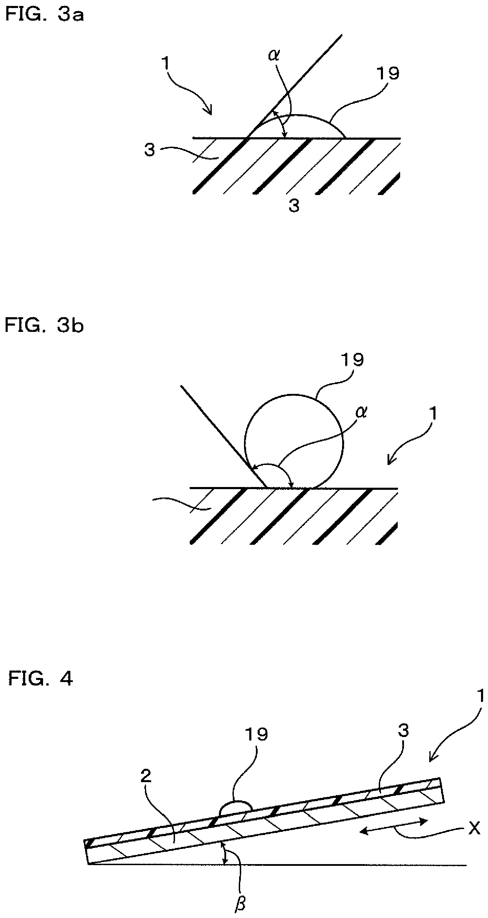

In the present example, multiple precoated alumi num sheets (specifically, sample E 1 to sample E21 and sample C1 to sample C9) pertaining to working examples and comparative examples were prepared, and their characteristics were compared and evaluated. As shown in FIG. 1, a precoated aluminum sheet 1 according to the working examples comprises: a substrate 2 composed of aluminum; and a hydrophilic-coating film 3 formed on at least one surface thereof. As shown in FIG. 1 and FIG. 2, with regard to the precoated aluminum sheet 1, the surface roughness Rz_{L} of the hydrophilic-coating film 3 in a rolling-parallel direction X of the substrate 2 and the surface roughness Rz_{LT} of the hydrophilic-coating film 3 in a rolling-perpendicular direction Y of the substrate 2 satisfy the relationships Rz_{L} ¤ 1.5 ≈m, 0.3 ≈m ¤ Rz_{LT} ¤ 2.5 ≈m, and Rz_{L}/Rz_{LT} ¤ 0.9. As shown in FIG. 3(a), the contact angle of a water droplet 19 with respect to the hydrophilic-coating film 3 is 25é or less. In addition, as shown in FIG. 4, the sliding angle ∮ of the water droplet 19, in the rolling-parallel direction X of the substrate 1, with respect to the hydrophilic-coating film 3 is 20é or less.

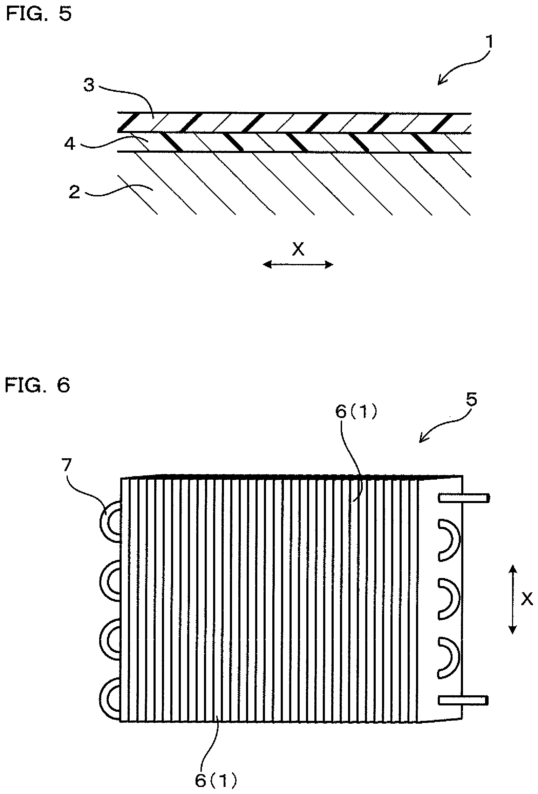

In the present example, multiple precoated aluminum sheets (i.e., sample E1 to sample E21 and sample C1 to sample C9) having differing surface roughnesses Rz_{L}, surface roughnesses Rz_{LT}, water droplet contact angles , water droplet sliding angles ∮, and the like were manufactured by modifying the substrate surface roughness Rz, the type of chemical-conversion treatment, the presence and type of primer layer, the composition and the viscosity of the hydrophilic paint used in the manufacture of the hydrophiliic-coating film, the film thickness of the hydrophilic-coating film, and the like as shown in Table 1 and Table 2. With regard to the hydrophilic paint, the hydrophilic polymer, the type of cross-linking agent, the mixing ratio, and the like were modified as shown in Table 1 and Table 2. The amount of the chemical-conversion coating formed was 20 mg/m² in every case. In addition, in every precoated aluminum sheet, the hydrophilic-coating film was formed on both si des of the substrate. In addition, the precoated aluminum sheets 1 in sample E19 to sample E21 had a primer layer 4 between the substrate 2 and the hydrophilic-coating film 3, as shown in FIG. 5. In the other precoated aluminum sheets 1, there was no primer layer, and the hydrophilic-coating film 3 was formed on the substrate 2 as shown in FIG. 1. The various physical properties and characteristics of sample E1 to sample E18 were measured as below.

### (A) Measurement of Surface Roughnesses Rz, Rz_{L}, Rz_{LT}

The surface roughnesses were measured using a laser microscope LEXT OLS-3000 manufactured by Olympus Corporation. Specifically, first, the magnification of the objective lens of the mi croscope was set to 100 ti mes, the scan pitch of the laser light was set to 0.05 ≈m, a surface of each sample was scanned, and thereby surface data was obtained. Subsequently, that surface data was analyzed in specified directions (specifically, in the rolling-parallel direction and the rolling-perpendicular direction), and the roughnesses were calculated. The direction was determined based on the rolling marks, which were recognized by magnification. The measurement length was 130 ≈m; in the rolling-parallel direction, measurements were performed at seven locations in one visual field; in the rolling-perpendicular direction, measurements were performed at seven locations in each of two visual fields (i.e., a total of 14 locations).

### (B) Film Thicknesses of the Hydrophilic-Coating Film and the Primer Layer

Film thickness was measured, using an eddy-current-type coating thickness gauge, at ten arbitrary locations on the surface of the hydrophilic-coating film of each precoated aluminum sheet, and an average film thickness was derived from the arithmetic mean of these measurement values. In addition, in the case of a precoated aluminum sheet having the primer layer between the substrate and the hydrophilic-coating film, film thickness was measured, usi ng the same eddy-current-type coati ng thickness gauge descri bed above, for the coated aluminum sheet in which the pri mer layer alone was formed and for the precoated alumi num sheet in which the hydrophilic-coating film was further formed on the pri mer layer. Furthermore, the average film thickness of the primer layer could be obtained from the measurement results of the coated alumi num sheet, and the average film thickness of the hydrophilic-coating film was derived from the difference between the measurement results (the average value) of the precoated aluminum sheet and the measurement results (the average value) of the coated aluminum sheet.

### (C) Contact Angle

Water droplets 19 of 2 ≈I were dropped onto the hydrophilic-coating film 3 of the precoated aluminum sheet 1 (refer to FIGS. 3(a) and (b)). Then, the contact angle of the water droplet 19 with respect to the hydrophilic-coating film 3 was measured. FIG. 3(a) shows the case in which the contact angle is an acute angle, and FIG. 3(b) shows the case in which the contact angle is an obtuse angle. The contact angles immediately after the formation of the hydrophilic-coating films are shown in Table 1 and Table 2.

### (D) Sliding Angle

As shown in FIG. 4, water droplets 19 of 10 ≈I were dropped, using a syringe, onto the hydrophilic-coating film 3 of the precoated aluminum sheet 1, and one end of the precoated aluminum sheet 1 was lifted up, and thereby the precoated aluminum sheet 1 was tilted. Then, when the water droplet 19 began to descend, the angle formed between the precoated aluminum sheet 1 and the horizontal plane was measured. This angle is the sliding angle ∮. It is noted that, as shown in FIG. 4, in the sliding-angle measurement test, the precoated aluminum sheet1 is tilted such that the rolling-parallel directionX is inclined. The sliding angles ∮ immediately after the formation of the hydrophilic-coating films are shown in Table 1 and Table 2.

Next, each precoated aluminum sheet was evaluated, as follows, for frost-formation preventability, defrosting properties, hydrophilicity durability, sheeting durability, corrosion resistance, and moisture resistance. In the evaluations of frost-formation preventability and defrosting properties, a heat exchanger for evaluation, which comprised fins composed of precoated aluminum sheets, was used.

As shown in FIG. 6, the heat exchanger 5 is a cross-fi n-tube type and comprises: numerous plate fins 6, each composed of the precoated aluminum sheet 1, and a metal tube 7 that passes through these and is for transferri ng heat. The plate fins 6 are spaced apart by a prescribed spacing and are disposed in parallel. The width (W) of the plate fins is 25.4 mm; the height (H) is 290 mm; the fin-stacking pitch (P) is 1.4 mm; the width (D) of the entire heat exchanger is 300 mm. The height direction of the plate fin 6 is the rolling-parallel direction X of the substrate. There are two columns of the metal tube 7 in the width (W) of the plate fins, and there are 14 stages of the metal tube 7 in the plate-fin height (H). It is noted that, for the sake of convenience in the preparation of the drawing, several of the metal tubes 7 are omitted in FIG. 6. In addition, the metal tube is a copper tube having a helical groove on its inner surface. The dimensions of the metal tube are outer diameter: 7.0 mm, bottom-wall thickness: 0.45 mm, fin height: 0.20 mm, fin vertical angle: 15.0é, and helix angle: 10.0é.

The heat exchanger 5 was prepared as follows. First, assembly holes (not shown), each having a fin-collar part with a height of 1⁻4 mm for inserting metal tubes 7 therethrough and fixing such, were formed by press working the plate fins 6, each composed of the precoated aluminum sheet 1 having a thickness of 0.1 mm. After stacking the plate fins, separately prepared metal tubes 7 were inserted through the interiors of the assembly holes. A copper tube, in which a groove was formed on its inner surface by rolling or the like and which was then cut to a standard length and hairpin bent, was used as the metal tubes 7. Next, by inserting tube-expanding plugs from one end of the metal tubes 7 and widening the outer diameter of the metal tubes 7, the metal tubes 7 were secured to the plate fi ns 6. After the tube-expanding plugs were removed, U-bent tubes were joined, by braising, to the metal tubes 7, and thereby the heat exchanger 5 was obtained.

### (E) Frost-Formation Preventability

Frost-formation preventability was evaluated using the heat exchangers 5 prepared as described above(referto FIG. 6). Specifically, the heat exchangers 5 comprising the fins 6 composed of the precoated aluminum sheets 1 of the sample E1 to sample E21 and sample C1 to sample C9 were installed in an environment in which the atmospheric temperature (i.e., dry-bul b temperature) was 2éC and the wet-bul b temperature was 1éC. Inside the metal tubes 7, which is for transferring heat, of the heat exchangers 1, coolant (i.e., a heat-exchanging medium) having a temperature of ⁻5éC and an outlet degree of superheat of 2éC flowed at a flow velocity of 20 kg/h. Meanwhile, a frost-formi ng operation of the heat exchanger 5 was performed under the condition in which the inlet wind speed of the circulating draft was set to 1.5 m/s. Furthermore, ventilation resistance was measured based on the pressure differential between the inlet side and the outlet side of the heat exchanger 5, and operation was performed until the ventilation resistance became 500 Pa. At the point in time when the ventilation resistance became 500 Pa, operation was switched to a defrosting operation, and coolant heated to approximately 20éC was circulated in the metal tube 7 for 2 min. The inlet wind speed of the draft circulated to the heat exchanger during the defrosti ng operation was set to 0m/s. The frost-forming operation and the defrosting operation were repeated for five cycles, and frost-formation preventability was evaluated during the fifth cycle of the frost-forming operation. In addition, the average amount of heat exchanged was measured by measuri ng the temperature and the pressure of the coolant at the coolant inlet and the coolant outlet of the heat exchanger during the fifth cycle test and by measuri ng the enthalpy differential of the coolant between the coolant inlet and the coolant outlet. Furthermore, the operation time until the ventilation resistance of the fifth cycle became 500 Pa was compared with the heat exchanger comprising the fins composed of sample C6. If the operation time extended 10 min or longer beyond that of the sample C6 heat exchanger, then it was evaluated as "□"; and if the operation time extended 5 min or longer and less than 10 min, then it was evaluated as "× ." In addition, if the extension of the operation time was from 0 to shorter than 5 min, then it was evaluated as "r "; and if the operation time was shorter, then it was evaluated as "ǘ."

### (E) Defrosting Property

An evaluation similar to that of frost-formation preventability was performed; if the remaining ice after defrosting was 20% or less of the total frost amount, then it was evaluated as" □"; if the remaining ice after defrosti ng was more than 20% and 40% or less of the total frost amount, then it was evaluated as "× "; if the remaining ice after defrosting was more than 40% and 80% or less of the total frost amount, then it was evaluated as "r "; and if the remaining ice after defrosti ng was more than 80% of the total frost amount, then it was eval uated as "ǘ."

### (F) Hydrophilicity Durability

Hydrophilicity durability was evaluated by measuring the contact angle after a deterioration trial. First, a cycle in which the precoated aluminum sheet was immersed in ion-exchanged water for 2 min and then dried by air blowing for 6 min was performed 300 cycles (the deterioration trial). Subsequently, the contact angle of the water droplet after this deterioration trial was measured by the method described above. If the contact angle after the deterioration trial was 10é or lower, then it was evaluated as " □"; if it was above 10é and 25é or lower, then it was eval uated as "× "; if it was above 25é and 30é or lower, then it was evaluated as "r "; and if it was above 30é then it was evaluated as "ǘ."

### (G) Sheeting Durability

Sheeting durability was evaluated by measuring the sliding angle after the deterioration trial. The deterioration trial is similar to that of the hydrophilicity durability described above, and the sliding angle measuring method is as described above. If the sliding angle after the deterioration trial was 10é or lower, then it was evaluated as" □"; if it was above 10é and 20é or lower, then it was evaluated as "× "; if it was above 20é and 30é or lower, then it was evaluated as "r "; and if it was above 30é it was evaluated as "ǘ."

### (H) Corrosion Resistance

Using each precoated aluminum sheet, the salt spray test stipulated in JIS Z2371 was performed for 500 h, and post-test corrosion resistance was evaluated. After the test, if a brown discoloring did not appear on the surface of the hydrophilic-coating film, then it was evaluated as "× "; and if a discoloring appeared, then it was evaluated as "ǘ."

### (I) Moisture Resistance

Using each precoated aluminum sheet, the moisture-resistance test stipulated in JIS H4001 was performed for 960 h, and post-test moisture resistance was eval uated. After the test, if a brown discoloring did not appear on the surface of the hydrophilic-coating film, then it was evaluated as "× "; and if a discoloring appeared, then it was evaluated as "ǘ."

**Table 1**

| Sample No. | Substrate | | Primer Layer | | Hydrophilic-Coating Film | | | | | | | | | | | |
|---|---|---|---|---|---|---|---|---|---|---|---|---|---|---|---|---|
| | Surface Roughness Rz (≈m) | Chemical-Conversion Treatment | Type | Film Thick-ness (≈m) | Hydrophilic Polymer 1 | | Hydrophilic Polymer 2 | | Cross-LinkingAgent | | Surface Roughness | | Rz_{L}/Rz_{LT} | Contact Angle (é) | Sliding Angle(é) | Film Thickness (≈m) |
| | | Type | | | Type | Content (parts by mass) | Type | Content (parts by mass) | Type | Content (parts by mass) | Rz_{L} (≈m) | Rz_{LT} (≈m) | | | | |
| E1 | 1.6 | Chromate Treatment | - | - | AE | 75 | AC | 5 | A | 20 | 1.3 | 1.6 | 0.81 | 10 | 10 | 0.8 |
| E2 | 1.6 | Chromate Treatment | - | - | AE | 65 | AC | 5 | A | 30 | 0.6 | 1.6 | 0.38 | 12 | 8 | 0.8 |
| E3 | 1.6 | Chromate Treatment | - | - | AE | 55 | AC | 5 | A | 40 | 0.2 | 1.6 | 0.13 | 14 | 12 | 0.8 |
| E4 | 2.3 | Chromate Treatment | - | - | AE | 80 | AC | 10 | A | 10 | 0.6 | 2.3 | 0.26 | 5 | 13 | 0.8 |
| E5 | 2.3 | Chromate Treatment | - | - | AE | 70 | AC | 10 | A | 20 | 0.6 | 2.3 | 0.26 | 10 | 10 | 0.8 |
| E6 | 0.5 | Chromate Treatment | - | - | AE | 60 | AC | 10 | A | 30 | 0.2 | 0.3 | 0.67 | 15 | 5 | 0.8 |
| E7 | 1.6 | Chromate Treatment | - | - | AE | 60 | - | - | A | 40 | 0.6 | 1.6 | 0.38 | 12 | 8 | 0.8 |
| E8 | 1.6 | Chromate Treatment | - | - | AE | 70 | - | - | A | 30 | 0.6 | 1.6 | 0.38 | 12 | 8 | 0.8 |
| E9 | 1.6 | Chromate Treatment | - | - | AE | 80 | - | - | A | 20 | 0.6 | 1.6 | 0.38 | 12 | 8 | 0.8 |
| E10 | 1.6 | Chromate Treatment | - | - | AC | 70 | - | - | A | 30 | 0.6 | 1.6 | 0.38 | 20 | 5 | 0.8 |
| E11 | 1.6 | Chromate Treatment | - | - | CM | 70 | - | - | A | 30 | 0.6 | 1.6 | 0.38 | 15 | 5 | 0.8 |

| Surface Roughness Rz (≈m) | Chemical-Conversion Treatment | Type | Film Thickness (≈m) | | Hydrophilic Polymer 1 | | Hydrophilic Polymer 2 | | Cross-Linking Agent | | Surface Roughness | | Rz_{L}/Rz_{LT} | Contact Angle (é) | Sliding Angle (é) | Film Thick -ness (≈m) |
|---|---|---|---|---|---|---|---|---|---|---|---|---|---|---|---|---|
| | Type | | | Type | Content (parts by mass) | Type | Content (parts by mass) | Type | Content (parts by mass) | Rz_{L} (≈m) | Rz_{LT} (≈m) | | | | | |
| E12 | 1.6 | C hromate Treatment | - | - | CA | 70 | - | - | A | 30 | 0.6 | 1.6 | 0.38 | 25 | 15 | 0.8 |
| E13 | 1.6 | Chromate T reatment | - | - | AE | 70 | - | - | B | 30 | 0.6 | 1.6 | 0.38 | 10 | 20 | 0.8 |
| E14 | 1.6 | Chromate T reatment | - | - | AE | 70 | - | - | C | 30 | 0.6 | 1.6 | 0.38 | 10 | 20 | 0.8 |
| E15 | 1.6 | Zirconia Treatment | - | - | AE | 75 | AC | 5 | A | 20 | 1.0 | 1.6 | 0.63 | 10 | 10 | 0.8 |
| E16 | 1.6 | Chromate T reatment | - | - | AE | 75 | AC | 5 | A | 20 | 1.0 | 1.6 | 0.63 | 20 | 20 | 0.3 |
| E17 | 1.6 | Chromate T reatment | - | - | AE | 75 | AC | 5 | A | 20 | 1.0 | 1.6 | 0.63 | 10 | 10 | 1.5 |
| E18 | 1.5 | Chromate T reatment | - | - | AE | 75 | AC | 5 | A | 20 | 1.0 | 1.6 | 0.63 | 10 | 10 | 2 |
| E19 | 1.6 | Chromate Treatment | Urethane Type | 1.2 | AE | 75 | AC | 5 | A | 20 | 1.0 | 1.6 | 0.63 | 10 | 10 | 0.8 |
| E20 | 1.6 | Chromate Treatment | Acrylic Type | 1.2 | AE | 75 | AC | 5 | A | 20 | 1.0 | 1.6 | 0.63 | 10 | 10 | 0.8 |
| E21 | 1.6 | Chromate Treatment | Epoxy Type | 1.2 | AE | 75 | AC | 5 | A | 20 | 1.0 | 1.6 | 0.63 | 10 | 10 | 0.8 |

| | | | | | | | | | | | | | | | | |
|---|---|---|---|---|---|---|---|---|---|---|---|---|---|---|---|---|
| AC: Acrylic-cellulose resin Cross-Linking Agent A : Isocyanate CM: Cellulose-melamine resin Cross-Linking Agent B: Blocked polyisocyanate CA: Cellulose-acetate resin Cross-Linking Agent C: Melamine | | | | | | | | | | | | | | | | |

**Table 2**

| Sample No. | Substrate | | Hydrophilic-Coating Film | | | | | | | | | | | |
|---|---|---|---|---|---|---|---|---|---|---|---|---|---|---|
| | Surface Roughness Rz(≈m) | Chemical-Converersion Treatment | Hydrophilic Polymer 1 | | Hydrophilic Polymer 2 | | Cross-Linking Agent | | Surface Roughness | | Rz_{L}/Rz_{LT} | Contact Angle (é) | Sliding Angle (é) | Film Thickness (≈m) |
| | | Type | Type | Content (parts by mass) | Type | Content (parts by mass) | Type | Content (parts by mass) | Rz_{L} (≈m) | Rz_{LT} (≈m) | | | | |
| C1 | 0.3 | Chromate Treatment | AE | 75 | AC | 5 | A | 20 | 0.2 | 0.16 | 1.25 | 30 | 5 | 0.8 |
| C2 | 3.5 | Chromate Treatment | AE | 75 | AC | 5 | A | 20 | 1.5 | 2.8 | 0.54 | 5 | 20 | 0.8 |
| C3 | 1.5 | Chromate Treatment | AE | 85 | AC | 10 | 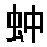 | 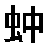 | 1.0 | 1.6 | 0.63 | 20 | 25 | 0.3 |
| C4 | 1.5 | Chromate Treatment | AE | 75 | AC | 5 | A | 20 | 1.0 | 1.6 | 0.63 | 20 | 25 | 0.2 |
| C5 | 1.5 | 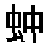 | AE | 75 | AC | 5 | A | 20 | 1.0 | 1.6 | 0.63 | 20 | 25 | 0.3 |
| C6 | 1.5 | Chromate Treatment | AR | 75 | 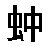 | 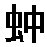 | C | 25 | 3.0 | 3.0 | 1.00 | 15 | 15 | 0.8 |
| C7 | 1.5 | Chromate Treatment | FC | 100 | 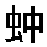 | 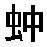 | 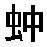 | 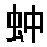 | 1.0 | 1.6 | 0.63 | 120 | 10 | 0.8 |
| C8 | 1.5 | Chromate Treatment | AE | 75 | AC | 5 | A | 20 | 0.8 | 0.8 | 1 | 15 | 25 | 0.8 |
| C9 | 1.5 | C hromate Treatment | AE | 75 | AC | 5 | A | 20 | 1.6 | 2.3 | 0.7 | 15 | 25 | 0.8 |

| | | | | | | | | | | | | | | |
|---|---|---|---|---|---|---|---|---|---|---|---|---|---|---|
| AE: Acrylic-modified epoxy resin AR: Acrylic resin FC: Fluororesin AC: Acrylic-cellulose resin Cross-Linking Agent A: Isocyanate Cross-LinkingAgentC: Melamine | | | | | | | | | | | | | | |

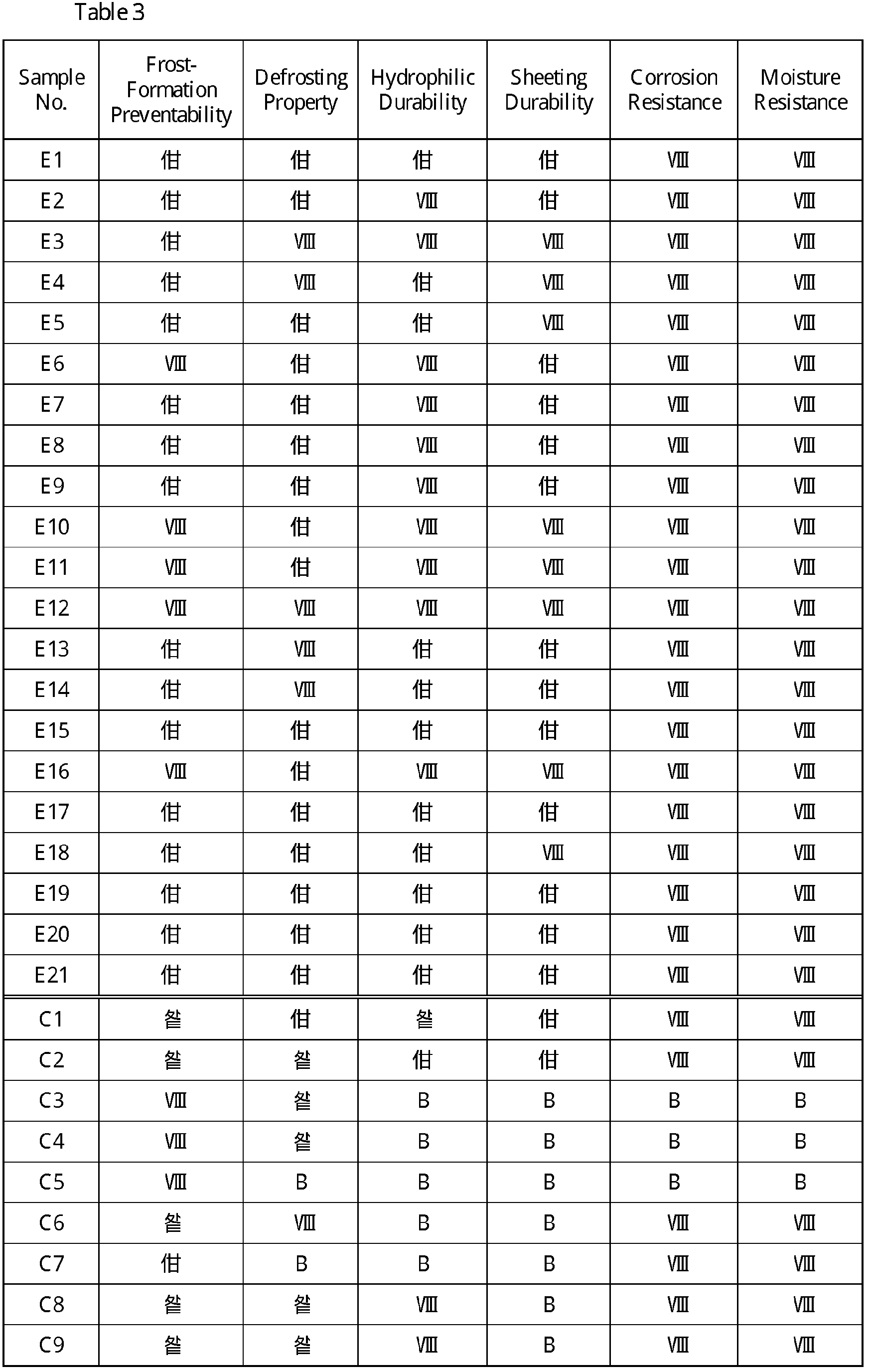

## Claims

1. A precoated alumi num sheet for a fin of a heat exchanger comprisi ng:
a substrate composed of aluminum; and
a hydrophilic-coati ng film formed on at least one surface of the substrate;
wherein:
a surface roughness Rz_{L} of the hydrophilic-coati ng film in a rolling-parallel di recti on of the substrate and a surface roughness Rz_{LT} of the hydrophi lic-coati ng film in a rolling-perpendicular direction of the substrate satisfy the relationships Rz_{L} ¤ 1.5 ≈m, 0.3 ≈m ¤ Rz_{LT} ¤ 2.5 ≈m, and Rz_{L}/Rz_{LT} ¤ 0.9; and
a contact angle of a water droplet with respect to the hydrophilic-coating film is 25é or lower, and a sliding angle of the water droplet in the rolling-parallel direction of the substrate is 20é or lower.

2. The precoated aluminum sheet accordi ng to claim 1, wherein a surface roughness Rz of the substrate in the rolling-perpendicular direction is 0.5 ≈m or more and 3 ≈m or less.

3. The precoated alumi num sheet accordi ng to clai m 1 or 2, wherein an average film thickness of the hydrophilic-coating film is 0.3 ≈m or more and 1.5 ≈m orless.

4. The precoated aluminum sheet according to any one of claims 1⁻3, wherein:
the hydrophilic-coating film is composed of a resin having an amide group, in which a hydrophi lic polymer has been cross-linked by a cross-linking agent;
the hydrophilic polymer is composed of at least one selected from the group consisting of acrylic-modified epoxy resin, acrylic-cellulose resin, cellulose-melamine resin, cellulose-acetate resin, and polyoxyalkylene resin; and
the cross-linki ng agent is composed of at least one selected from the group consisti ng of isocyanate, blocked polyisocyanate, and carbodiimide.

5. The precoated aluminum sheet according to any one of claims 1⁻4, wherein:
the precoated fin has a primer layer formed between the substrate and the hydrophilic-coati ng film;
the primer layer is composed of at least one selected from a urethane-based primer, an acrylic-based primer, and an epoxy-based primer; and
an average film thickness of the pri mer layer is 0.3 ≈m or more and 3 ≈m or less.

6. A heat exchanger comprising a fin composed of the precoated alumi num sheet according to any one of claims 1⁻5.

7. The heat exchanger according to claim 6, wherein at least part of the fin is disposed such that the rolling- parallel di recti on of the substrate is the verti cal di recti on.
